# DEMANDE DE BREVET EUROPEEN

(11) **EP 1 859 988 A1**
(43) Date de publication de la demande: **28.11.2007**
(21) Numéro de dépôt: 07290650.6
(22) Date de dépôt: 21.05.2007
(51) Int. Cl.: B60N 2/427

(54) **Siège de véhicule automobile intégrant une partie monobloc déformable élastiquement**

(30) Priorité: 22.05.2006 FR 0604568
(71) Demandeur: Centre d'etude et de recherche pour l'automobile (CERA), 51100 Reims (FR)
(72) Inventeur: Le Gall, Francois, 02130 Coulonges (FR)
(74) Mandataire: Sayettat, Julien Christian

(57) **Abrégé**

L'invention concerne un siège (1) de véhicule automobile comprenant une armature d'assise (2) et une armature de dossier (3) associées entre elles par un système de jonction (4), ledit système comprenant une partie (5) monobloc déformable plastiquement, ladite partie déformable étant issue de matière d'au moins l'une desdites armatures et étant agencée de sorte que, sous application d'une première force prédéterminée (F1) dirigée vers l'arrière sur ledit dossier, ladite partie déformable se déforme et que ledit dossier recule sensiblement en translation par rapport à ladite assise, l'angle (A) entre ladite assise et ledit dossier restant sensiblement constant. L'invention concerne également un procédé de réalisation d'une partie déformable d'un tel siège.

## Description

L'invention concerne un siège de véhicule automobile et un procédé de réalisation d'une partie déformable d'un tel siège.

Il est connu de réaliser un siège de véhicule automobile comprenant une armature d'assise et une armature de dossier associées entre elles par un système de jonction. En outre, il est connu d'utiliser des moyens d'absorption d'énergie, notamment par déformation, qui sont agencés de sorte que, sous application d'une première force prédéterminée dirigée vers l'arrière sur ledit dossier, ladite partie déformable se déforme.

Un tel siège permet de réaliser une absorption d'énergie lorsque son occupant est projeté contre le dossier lors d'une collision du véhicule, ce qui permet de limiter ses blessures éventuelles.

Toutefois, les moyens d'absorption d'énergie sont notamment formés par une pièce rapportée, par exemple par emboîtement ou par vissage, ce qui entraîne une complexité de réalisation.

L'invention a pour but de pallier les inconvénients de l'art antérieur.

A cet effet, et selon un premier aspect, l'invention propose un siège de véhicule automobile comprenant une armature d'assise et une armature de dossier associées entre elles par un système de jonction, ledit système comprenant une partie monobloc déformable plastiquement, ladite partie déformable étant issue de matière d'au moins l'une desdites armatures et étant agencée de sorte que, sous application d'une première force prédéterminée dirigée vers l'arrière sur ledit dossier, ladite partie déformable se déforme et que ledit dossier recule sensiblement en translation par rapport à ladite assise, l'angle entre ladite assise et ledit dossier restant sensiblement constant.

De la sorte, la partie déformable fait partie intégrante d'une des armatures, ce qui en simplifie la réalisation.

Selon un deuxième aspect, l'invention propose un procédé de réalisation d'une partie déformable d'un tel siège, ledit procédé prévoyant de réaliser ladite partie déformable par emboutissage et découpe dans l'armature dont elle est issue.

Dans cette description, les termes de positionnement dans l'espace (avant, arrière, vertical, horizontal, inférieur, supérieur,...) sont pris en référence au siège disposé dans le véhicule.

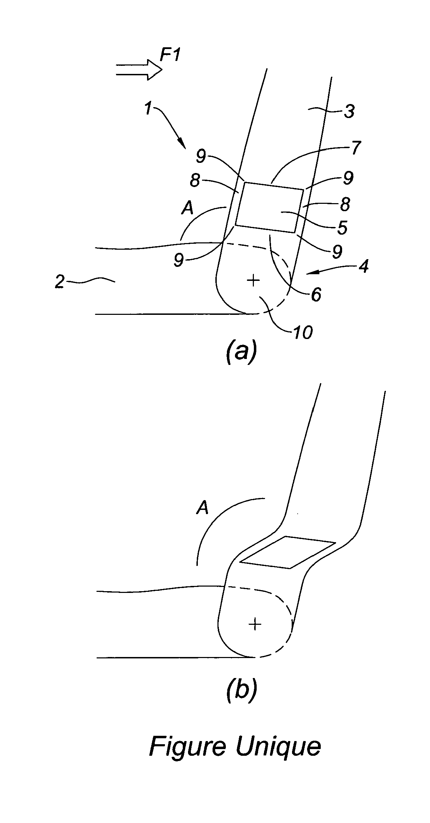

D'autres particularités et avantages de l'invention apparaîtront dans la description qui suit, faite en référence à la figure jointe qui est une vue latérale schématique, centrée sur le système de jonction, d'un siège selon un mode de réalisation de l'invention, avant (a) et après (b) déformation de la partie déformable.

En référence à la figure, on décrit à présent un siège 1 de véhicule automobile comprenant une armature d'assise 2 et une armature de dossier 3 associées entre elles par un système de jonction 4, ledit système comprenant une partie monobloc déformable 5 plastiquement, ladite partie déformable étant issue de matière de ladite armature de dossier et étant agencée de sorte que, sous application d'une première force prédéterminée F1 dirigée vers l'arrière sur ledit dossier, ladite partie déformable se déforme et que ledit dossier recule sensiblement en translation par rapport à ladite assise, l'angle A entre ladite assise et ledit dossier restant sensiblement constant.

De façon non représentée, la partie déformable 5 peut être issue de matière de l'armature d'assise 2.

Selon la réalisation représentée, la partie déformable 5 comprend un bord inférieur 6 et un bord supérieur 7 sensiblement horizontaux, lesdits bords étant reliés entre eux par deux branches 8 disposées de façon sensiblement verticale de part et d'autre desdits bords, les zones de liaison 9 desdits bords aux dites branches étant de résistance mécanique moindre que lesdites branches de sorte que, sous application de la première force prédéterminée F1, lesdites zones de liaison se déforment plastiquement de manière que lesdits bords se rapprochent l'un de l'autre tout en restant sensiblement parallèles.

Selon la réalisation représentée, le système de jonction 4 comprend en outre un dispositif d'articulation 10 entre les armatures d'assise 2 et de dossier 3, de sorte à permettre un réglage de l'inclinaison du dossier.

De façon non représentée, les branches 8 peuvent être non rectilignes, de sorte à pouvoir, une fois les bords 6,7 rapprochés et lorsque la force appliquée est au moins égale à une deuxième force prédéterminée, subir un étirement permettant de réaliser une absorption d'énergie supplémentaire par recul additionnel du dossier.

Un procédé de réalisation d'une partie déformable 5 d'un tel siège 1 peut prévoir de réaliser ladite partie déformable par emboutissage et découpe dans l'armature métallique 2,3 dont elle est issue.

## Revendications

1. Siège (1) de véhicule automobile comprenant une armature d'assise (2) et une armature de dossier (3) associées entre elles par un système de jonction (4), ledit système comprenant une partie (5) monobloc déformable plastiquement, ladite partie déformable étant issue de matière d'au moins l'une desdites armatures et étant agencée de sorte que, sous application d'une première force prédéterminée (F1) dirigée vers l'arrière sur ledit dossier, ladite partie déformable se déforme et que ledit dossier recule sensiblement en translation par rapport à ladite assise, l'angle (A) entre ladite assise et ledit dossier restant sensiblement constant.

2. Siège de véhicule automobile selon la revendication 1, la partie déformable (5) comprenant un bord inférieur (6) et un bord supérieur (7) sensiblement horizontaux, lesdits bords étant reliés entre eux par deux branches (8) disposées de façon sensiblement verticale de part et d'autre desdits bords, les zones de liaison (9) desdits bords aux dites branches étant de résistance mécanique moindre que lesdites branches de sorte que, sous application de la première force prédéterminée (F1), lesdites zones de liaison se déforment plastiquement de manière que lesdits bords se rapprochent l'un de l'autre tout en restant sensiblement parallèles.

3. Siège selon la revendication 1 ou 2, la partie déformable (5) étant issue de matière de l'armature de dossier (3).

4. Siège selon la revendication 1 ou 2, la partie déformable (5) étant issue de matière de l'armature d'assise (2).

5. Siège selon l'une quelconque des revendications 1 à 4, le système de jonction (4) comprenant en outre un dispositif d'articulation (10) entre les armatures d'assise (2) et de dossier (3).

6. Siège selon l'une quelconque des revendications 1 à 5, les branches (8) étant non rectilignes, de sorte à pouvoir, une fois les bords (6,7) rapprochés et lorsque la force appliquée est au moins égale à une deuxième force prédéterminée, subir un étirement permettant de réaliser une absorption d'énergie supplémentaire par recul additionnel du dossier.

7. Procédé de réalisation d'une partie déformable (5) d'un siège selon l'une quelconque des revendications 1 à 6, ledit procédé prévoyant de réaliser ladite partie déformable par emboutissage et découpe dans l'armature métallique (2,3) dont elle est issue.
